# EUROPÄISCHE PATENTANMELDUNG

(11) **EP 1 707 338 A1**
(43) Veröffentlichungstag der Anmeldung: **04.10.2006**
(21) Anmeldenummer: 06110063.2
(22) Anmeldetag: 16.02.2006
(51) Int. Cl.: B29C 55/28, B29C 47/06, B29C 49/18, B29C 49/22, B32B 27/00, B29C 55/02

(54) **Verfahren zum Herstellen einer gereckten Kunststoff-Folie**

(30) Priorität: 27.03.2005 DE 102005014474
(71) Anmelder: Huhtamaki Forchheim Zweigniederlassung der Huhtamaki Deutschland GmbH & Co. KG, 91301 Forchheim (DE)
(72) Erfinder: Günter, Walter, 91301, Forchheim (DE); Bauer, Michael, 91301, Forchheim (DE); Schmitzer, Siegfried, 91301, Forchheim (DE)
(74) Vertreter: Hutzelmann, Gerhard

(57) **Zusammenfassung**

Verfahren zum Herstellen einer gereckten Kunststoff-Folie aus Polyolefinen und/oder Kombinationen von Polyolefinen und Polyamid, die im Extrusions- bzw. Coextrusions- Blasverfahren hergestellt werden, wobei eine erste Reckung biaxial während des Blasverfahrens erfolgt, der eine weitere Reckung nachgeschaltet ist.

## Beschreibung

Die Erfindung bezieht sich auf ein Verfahren zum Herstellen einer gereckten Kunststoff-Folie aus Polyolefinen und/oder Kombinationen von Polyolefinen und Polyamid, die im Extrusions- bzw. Coextrusions- Blasverfahren hergestellt werden.

Es sind derartige Folien aus dem Stand der Technik bekannt, die jedoch alle den Nachteil haben entweder verhältnismäßig dick zu sein oder keine für die jeweilige Verwendung optimale Eigenschaften aufzuweisen.

Aufgabe der Erfindung ist es, ein Herstellungsverfahren vorzuschlagen, welches einerseits die Herstellung dünner Folien im Blasverfahren ermöglicht und zudem eine Einstellung der mechanischen und physikalischen Eigenschaften der erzeugten Folie in weiten Grenzen ermöglich.

Diese Aufgabe wird erfindungsgemäß dadurch gelöst, daß eine erste Reckung biaxial während des Blasverfahrens erfolgt, der eine weitere Reckung nachgeschaltet ist.

Hierdurch wird einerseits die Foliendicke reduziert als auch die Eigenschaften der erzeugten Folie verbessert.

Eine sehr vorteilhafte Ausgestaltung des Verfahrens liegt auch darin, daß die zweite Reckung unmittelbar im Anschluss an die erste Reckung erfolgt.

Es ist erfindungsgemäß aber auch möglich, daß die zweite Reckung unabhängig von der ersten Reckung erfolgt.

Sehr vorteilhaft ist es auch, wenn wenigstens die erste Reckung biaxial simultan erfolgt.

Durch die nachgeschaltete zweite Reckung werden die Eigenschaften der Folie erheblich verbessert. Mit der biaxialen Reckung wird eine nochmalige Verbesserung erzielt.

Gemäß einer weiteren Ausgestaltung der Erfindung ist es auch sehr vorteilhaft, wenn die Temperatur der geblasenen Folie zum Strecken in Abhängigkeit vom für die Herstellung verwendeten Kunststoff-Material auf 90 bis 180°C eingestellt wird.

Hierdurch wird der thermoelastische Bereich erreicht. Die Abkühlung wird am Ende des Blasvorganges in erster Linie durch Kühlgebläse erzielt.

Es hat sich auch als sehr vorteilhaft erwiesen, wenn zum Temperieren der Folie vor dem zweiten Recken Temperierwalzen eingesetzt werden, welche die Folientemperatur auf etwa 100 bis 180°C einstellen.

Ebenfalls sehr vorteilhaft ist es, wenn die Folie vor dem zweiten Recken mittels Wärmestrahler auf die gewünschte Recktemperatur von etwa 100 bis 180°C erwärmt wird.

Mittels beider Verfahren ist eine effektive Temperierung der Folie gewährleistet.

Es hat sich gemäß einer weiteren Ausgestaltung der Erfindung auch als äußerst vorteilhaft erwiesen, wenn die Folie nach dem Recken getempert wird, wobei in der Folie eine Temperatur von 90 bis 180°C erreicht wird.

Hierdurch werden die beim Recken erreichten Verhältnisse der Folie fixiert.

Gemäß einer weiteren Ausgestaltung der Erfindung ist es äußerst vorteilhaft, wenn die Folie vor dem Aufwickeln abgekühlt wird.

Damit wird ein versehentliches Verkleben der einzelnen Wickellagen vermieden.

Ebenfalls als äußerst vorteilhaft hat es sich erwiesen, wenn eine innere oder äußere Schicht fertig zuläuft, auf die dann die weiteren Schichten im Coextrusions-Blasverfahren aufgebracht werden.

Dadurch lassen sich Mehrschicht-Verbunde erzeugen, deren einzelnen Schichten oder Schichtgruppen unterschiedliche Schmelzindizes aufweisen.

Eine weitere sehr vorteilhafte Fortbildung der Erfindung liegt auch darin, daß die Folie ein- oder beidseitig silikonisiert wird.

Hiermit kann die fertige Folie auch als Releasefolie eingesetzt werden. Zudem wird die Handhabung der Folie während der Herstellung verbessert.

Dabei hat es sich als sehr vorteilhaft erwiesen, wenn die Silikonisierung zusammen mit der Folie extrudiert wird

Es ist aber auch sehr vorteilhaft, wenn die Silikonisierung nachträglich aufextrudiert wird.

Beide Verfahren bieten je nach eingesetzter Silikonisierung Vorteile. Es ist auch denkbar, daß anstatt einer Silikonisierung eine andere gering haftende Substanz eingesetzt wird.

Eine weitere sehr vorteilhafte Ausgestaltung der Erfindung liegt auch dann vor, wenn die Reckung in einem Verhältnis zwischen 3:1 und 25:1, vorzugsweise 7:1 erfolgt.

Solche Reckverhältnisse ergeben sehr gute Ergebnisse in Bezug auf Festigkeit, Steifigkeit und Transparenz der Folie.

Als äußerst vorteilhaft hat es sich gemäß einer weiteren Ausgestaltung der Erfindung auch erwiesen, wenn vor der zweiten Reckung der geblasene Folienschlauch zusammengelegt und in sich verbunden wird und/oder eine weitere Folienlage zugeführt wird.

Hierdurch wird die Dicke der Ausgangsfolie erheblich erhöht, wodurch der Verbund mit einem größeren Reckverhältnis gereckt werden kann.

Es hat sich auch als sehr vorteilhaft erwiesen, wenn die Folienschichten derart ausgerüstet sind, daß diese bei Raumtemperatur aufeinander zu gleiten vermögen.

Dadurch können die einzelnen Folienschichten zueinander verschoben und exakt positioniert werden.

Es ist desweiteren sehr vorteilhaft, wenn der Folienschlauch zusammengeklebt wird.

Damit wird der Folienschlauch in sich sehr gut verbunden.

Eine weitere sehr vorteilhafte Ausgestaltung der Erfindung liegt auch darin, daß die einzelnen Folienlagen mit einer niedrig schmelzenden Schicht ausgerüstet sind.

Dabei hat es sich als sehr vorteilhaft erwiesen, wenn die niedrig schmelzende Schicht aus PE oder dergleichen besteht.

Erfindungsgemäß als äußerst vorteilhaft hat es sich erwiesen, wenn die Folienschichten über die niedrig schmelzende Schicht durch Reckung miteinander verbunden werden.

Dabei ist es sehr vorteilhaft, wenn durch den Reckvorgang die Folienschichten miteinander verklebt werden.

Ebenfalls als äußerst vorteilhaft hat es sich erwiesen, wenn durch den Reckvorgang die Adhäsion zwischen den Folienschichten derart erhöht wird, daß diese ausreichend aneinander haften.

Eine niedrig schmelzende Schicht vermag durch die beim Recken auftretenden Energien mit einer weiteren Schicht so in Kontakt zu treten, daß die Schichten fest miteinander verbunden werden. Dies kann je nach verwendeten Materialien zu einer Verklebung der Schichten mittels der unter Umständen niedrig schmelzenden Schicht bzw. mindestens zu einer so großen Adhäsion führen, daß der Folienverbund zusammenhält.

Gemäß einer weiteren Fortbildung der Erfindung hat es sich als äußerst vorteilhaft erwiesen, wenn die zweite Reckung als Walzenreckung ausgeführt wird.

Ebenfalls als sehr vorteilhaft hat es sich erwiesen, wenn die zweite Reckung als Kluppenreckung ausgeführt wird.

Je nach verwendeten Materialien und zu erreichendem Reckverhältnis bzw. nach Art der Reckung bieten beide Verfahren Vorteile.

Erfindungsgemäß hat es sich auch als äußerst vorteilhaft erwiesen, wenn der Folienschlauch als mehrlagiges Coextrudat ausgebildet ist.

Wird der Schlauch als mehrlagiges Coextrudat hergestellt, werden Arbeitsschritte bei der Herstellung eines Verbundes aus mehreren Einzelschichten eingespart.

Es hat sich gemäß einer weiteren Ausgestaltung der Erfindung auch als sehr vorteilhaft erwiesen, wenn die zweite Reckung erst erfolgt, wenn mehrere Folienschichten zu einem mehrschichtigen Verbund zusammengefügt sind.

Erfindungsgemäß hat es sich auch als sehr vorteilhaft erwiesen, wenn wenigstens eine Folienlage aus Polyamid hergestellt wird.

Ebenfalls als sehr vorteilhaft hat es sich erwiesen, wenn wenigstens eine Folienlage aus Polypropylen hergestellt wird.

Weiterhin sehr vorteilhaft ist es, wenn wenigstens eine Folienlage aus Polyethylen hergestellt wird.

Zudem ist es äußerst vorteilhaft, wenn wenigstens eine Folienlage mit Füllmitteln versehen wird.

Durch Folienschichten aus verschiedenen Materialien werden jeweils die positiven Eigenschaften der einzelnen Materialien miteinander kombiniert.

Eine weitere sehr vorteilhafte Ausgestaltung der Erfindung ist auch darin zu sehen, daß die Folienlage mit Mikrokapseln gefüllt wird.

Ebenfalls als sehr vorteilhaft hat es sich erwiesen, wenn wenigstens eine Folienlage geschäumt wird.

Dabei hat es sich als sehr vorteilhaft erwiesen, wenn die Schäumung durch Mikrokapseln erfolgt.

Mit Hilfe von mit Mikrokapseln gefüllten Folienlagen oder mit geschäumten Folienlagen lassen sich besondere Eigenschaften des Gesamtverbundes erzielen. So ist es zum Beispiel denkbar dadurch die Isolationsfähigkeit des Verbundes zu erhöhen, die Oberflächenrauhigkeit zu verändern oder aber auch die Opazität des Verbundes zu verändern.

Eine weitere sehr vorteilhaften Ausgestaltung der Erfindung liegt auch darin, daß wenigstens in einer Folienlage amorphe Bereiche vorgesehen werden.

Dabei hat es sich als sehr vorteilhaft erwiesen, wenn die amorphen Bereiche derart ausgebildet werden, daß diese während und nach einem Reckvorgang immer noch amorph sind.

Mit amorphen Bereichen einer Folienlage lassen sich einerseits optische als auch mechanische Eigenschaften der Folie beeinflussen. Es ist aber auch denkbar, auf diese Art eine beschreibbare Folie zu schaffen.

Es hat sich auch als sehr vorteilhaft erwiesen, wenn die Folie als steife Folie ausgebildet ist.

Steife Folien lassen sich im allgemeinen nur sehr aufwendig herstellen und weisen eine hohe Dicke auf. Durch die gereckte Mehrschichtkonstruktion werden vergleichbare Werte in Bezug auf Steifigkeit erzielt.

Es hat sich dabei als sehr vorteilhaft erwiesen, wenn die Folie gute optische Eigenschaften aufweist.

Gute optische Eigenschaften sind bei herkömmlichen steifen Folien nicht bzw. nur unter größten Umständen erzielbar.

Dabei ist es sehr vorteilhaft, wenn die Folie transparent ausgebildet ist.

Transparente, aber dennoch steife Folien sind bislang nur äußerst schwer herzustellen, bzw. weisen eine erhebliche Dicke auf.

Eine weitere sehr vorteilhafte Ausgestaltung der Erfindung liegt auch dann vor, wenn die Folie derart ausgebildet ist, daß sie einen geringen Schrumpf aufweist.

Geringer Schrumpf kann einerseits durch die Reckung mit anschließender Temperung oder aber durch eine Kombination mehrere Folienschichten aus unterschiedlichen Rohstoffen erzielt werden.

Erfindungsgemäß ist es auch sehr vorteilhaft, wenn die Folie eine gute Spleißbarkeit aufweist.

Es hat sich aber auch als sehr vorteilhaft erwiesen, wenn die Folie aufgrund der Abfolge der einzelnen Folienlagen eine schlechte Spleißbarkeit aufweist

Sehr vorteilhaft ist es auch, wenn die Spleißbarkeit durch eine partielle und/oder vollflächige Verklebung einzelner Folienschichten miteinander eingestellt wird.

Durch eine Kombination mehrerer Materialien und eventuell verschieden ausgerichteter Reckungen lässt sich die Spleißbarkeit des Verbundes sehr gut einstellen.

Eine weitere sehr vorteilhafte Ausgestaltung der Erfindung liegt auch dann vor, wenn die einzelnen Folienschichten verhältnismäßig dünn ausgebildet sind.

Eine ebenfalls sehr vorteilhafte Weiterbildung der Erfindung liegt auch darin, daß eine Vielzahl von Folienlagen vorgesehen ist, die zusammen einen verhältnismäßig dicken Folienverbund bilden.

Dabei hat es sich als äußerst vorteilhaft erwiesen, wenn der gesamte Verbund gereckt ist und dadurch die Dicke des Verbundes signifikant reduziert ist.

Hierdurch erhält man wieder eine dünne Folie, die jedoch die positiven Eigenschaften der einzelnen Schichten in sich vereint und insgesamt die Eigenschaften nur wesentlich dickerer Folien aufweist.

Das Verfahren wird so durchgeführt, daß zum Beispiel Polypropylen aus einer Ringdüse extrudiert wird, wobei in diese Ringdüse mehrere Extruder münden können. Es ist aber auch möglich, konzentrisch zur ersten Ringdüse weitere Ringdüsen vorzusehen. Über die mehreren Extruder bzw. Ringdüsen können weitere Lagen aus gleichen oder anderen Kunststoffen sowie Haftvermittlern und dergleichen coextrudiert werden.

Anstelle von PP können auch Abmischungen von PP mit LLDPE oder Abmischungen von PP mit sogenannten Compatibilizern eingesetzt werden. Als Corelayer kann auch Polyamid verwendet werden.

Darüber hinaus ist der Einsatz von Füllstoffen zur Festigkeitsmodifizierung möglich. Auch können Füllstoffe zugegeben werden, die die Atmungaktivität der Folie insbesondere im Zusammenhang mit dem Recken erhöhen.

Durch den Einsatz von Mikrokapseln und/oder geschäumten Folienlagen lassen sich zum Beispiel gute Isolationswerte, oder auch wieder eine gute Atmungsaktivität der Folie erreichen. Es ist auch denkbar, daß durch spezielle Zusatzstoffe, die zum Beispiel als Mikrokapseln in Folienschichten eingebettet werden, oder aber durch amorphe Folienschichten eine besonders gute Beschreibbarkeit des Folienverbundes erzielt wird.

Um eine vorteilhafte Verankerung einer Silikonschicht zu erzielen, können geeignete Polymere eingesetzt werden.

Bei der Coextrusion ist es möglich, gleichzeitig mehrere Schichten herzustellen; bei einer bevorzugten Ausgestaltung wurden gleichzeitig sieben Schichten coextrudiert.

Der extrudierte Schlauch wird dermaßen gekühlt, dass beim Blasprozess verhältnismäßig große Folienstärken erzielt werden. Dabei können Folienstärken von etwa 200µm erzeugt werden.

Durch eine Zusammenführung mehrerer Folienlagen, die miteinander verbunden werden oder aber durch eine Verklebung oder Verbindung des erzeugten Folienschlauches in sich können erheblich höhere Foliendicken erzielt werden.

Durch eine anschließende Reckung kann unter Beibehaltung der Eigenschaften des dicken Folienaufbaus eine signifikante Reduzierung der Foliendicke erreicht werden.

So ist es zum Beispiel denkbar, daß sogenannte steife Folien durch eine Kombination einer Mehrzahl von verschiedenen Folienschichten erzielt werden. Durch die anschließende Reckung und damit verbundene Verdünnung des Verbundes werden sehr dünne, aber dennoch steife Folien erzeugt, wie sie bislang nicht bekannt sind.

Auch ist vorgesehen, dass die Schlauchabmessungen durch Kalibrierung bestimmt werden. Dabei ist sowohl eine berührungsfreie Kalibrierung als auch eine Kalibrierung durch den Schlauch berührende Systeme möglich.

Bei einer weiteren Ausgestaltung des Verfahrens ist vorgesehen, dass eine innere oder äußere Schicht fertig zuläuft, auf die dann die weiteren Schichten im Coextrusions-Blasverfahren aufgebracht werden.

Noch schlauchförmig kann die Folie nach entsprechender Temperierung gereckt werden, wobei die Reckung sowohl quer, d.h. In Umfangsrichtung, längs oder simultan biaxial erfolgen kann.

Im Anschluss daran kann die Folie flachgelegt und nach entsprechender Temperierung einer weiteren Reckung unterzogen werden.

Im einfachsten Fall handelt es sich dabei um eine Längsreckung, die beispielsweise über einen Walzenspalt durchgeführt wird. Es sind jedoch Querreckung, Quer- und Längsreckung und simultane biaxiale Reckung möglich, die als Walzen- oder Kluppenreckungen ausgeführt werden können.

Ebenfalls Inline ist eine Silikonisierung ein- oder beidseitig möglich, wobei als Silikonsysteme LH, LF, UV ESH oder Emulsionssilikone einsetzbar sind. Es ist aber auch denkbar, daß die Silikonschicht zusammen mit den anderen Folienschichten coextrudiert wird.

Die so hergestellte Folie eignet sich infolge der sehr günstigen Eigenschaften als Releaseliner z.B. für Etiketten und Klebebänder oder ähnlichem.

Aufgrund der einstellbaren Reißfestigkeit konnte die Folie hervorragend als Ersatz von Releasepapier eingesetzt werden.

Andererseits ist aber auch der Einsatz der Folie in Easy-Opening-Anwendungen denkbar, wenn die Reißfestigkeit entsprechend niedrig eingestellt wird.

## Patentansprüche

1. Verfahren zum Herstellen einer gereckten Kunststoff-Folie aus Polyolefinen und/oder Kombinationen von Polyolefinen und Polyamid, die im Extrusions- bzw. Coextrusions- Blasverfahren hergestellt werden, **dadurch gekennzeichnet, dass** eine erste Reckung biaxial während des Blasverfahrens erfolgt, der eine weitere Reckung nachgeschaltet ist.

2. Verfahren nach Anspruch 1, **dadurch gekennzeichnet, dass** die zweite Reckung unmittelbar im Anschluss an die erste Reckung erfolgt.

3. Verfahren nach Anspruch 1, **dadurch gekennzeichnet, dass** die zweite Reckung unabhängig von der ersten Reckung erfolgt.

4. Verfahren nach Anspruch 1, 2 oder 3, **dadurch gekennzeichnet, dass** wenigstens die erste Reckung biaxial simultan erfolgt.

5. Verfahren nach einem der vorhergehenden Ansprüche, **dadurch gekennzeichnet, dass** die Temperatur der geblasenen Folie zum Strecken in Abhängigkeit vom für die Herstellung verwendeten Kunststoff-Material auf 90 bis 180°C eingestellt wird.

6. Verfahren nach Anspruch 5, **dadurch gekennzeichnet, dass** zum Temperieren der Folie vor dem zweiten Recken Temperierwalzen eingesetzt werden, welche die Folientemperatur auf etwa 100 bis 180°C einstellen.

7. Verfahren nach Anspruch 5, **dadurch gekennzeichnet, dass** die Folie vor dem zweiten Recken mittels Wärmestrahler auf die gewünschte Recktemperatur von etwa 100 bis 180°C erwärmt wird.

8. Verfahren nach einem der vorhergehenden Ansprüche, **dadurch gekennzeichnet, dass** die Folie nach dem Recken getempert wird, wobei in der Folie eine Temperatur von 90 bis 180°C erreicht wird.

9. Verfahren nach einem der vorhergehenden Ansprüche, **dadurch gekennzeichnet, dass** die Folie vor dem Aufwickeln abgekühlt wird.

10. Verfahren nach einem der vorhergehenden Ansprüche, **dadurch gekennzeichnet, dass** eine innere oder äußere Schicht fertig zuläuft, auf die dann die weiteren Schichten im Coextrusions-Blasverfahren aufgebracht werden.

11. Verfahren nach einem der vorhergehenden Ansprüche, **dadurch gekennzeichnet, dass** die Folie ein- oder beidseitig silikonisiert wird.

12. Verfahren nach Anspruch 11, **dadurch gekennzeichnet, daß** die Silikonisierung zusammen mit der Folie extrudiert wird

13. Verfahren nach Anspruch 11, **dadurch gekennzeichnet, daß** die Silikonisierung nachträglich aufextrudiert wird.

14. Verfahren nach einem der vorhergehenden Ansprüche, **dadurch gekennzeichnet, daß** die Reckung in einem Verhältnis zwischen 3:1 und 25:1, vorzugsweise 7:1 erfolgt.

15. Verfahren nach einem der vorhergehenden Ansprüche, **dadurch gekennzeichnet, daß** vor der zweiten Reckung der geblasene Folienschlauch zusammengelegt und in sich verbunden wird und/oder eine weitere Folienlage zugeführt wird.

16. Verfahren nach Anspruch 15, **dadurch gekennzeichnet, daß** die Folienschichten derart ausgerüstet sind, daß diese bei Raumtemperatur aufeinander zu gleiten vermögen.

17. Verfahren nach Anspruch 15 oder 16, **dadurch gekennzeichnet, daß** der Folienschlauch zusammengeklebt wird.

18. Verfahren nach Anspruch 15 oder 16, **dadurch gekennzeichnet, daß** die einzelnen Folienlagen mit einer niedrig schmelzenden Schicht ausgerüstet sind.

19. Verfahren nach Anspruch 18, **dadurch gekennzeichnet, daß** die niedrig schmelzende Schicht aus PE oder dergleichen besteht.

20. Verfahren nach Anspruch 18 oder 19, **dadurch gekennzeichnet, daß** die Folienschichten über die niedrig schmelzende Schicht durch Reckung miteinander verbunden werden.

21. Verfahren nach Anspruch 20, **dadurch gekennzeichnet, daß** durch den Reckvorgang die Folienschichten miteinander verklebt werden.

22. Verfahren nach Anspruch 20, **dadurch gekennzeichnet, daß** durch den Reckvorgang die Adhäsion zwischen den Folienschichten derart erhöht wird, daß diese ausreichend aneinander haften.

23. Verfahren nach einem der vorangehenden Ansprüche, **dadurch gekennzeichnet, daß** die zweite Reckung als Walzenreckung ausgeführt wird.

24. Verfahren nach einem der vorangehenden Ansprüche, **dadurch gekennzeichnet, daß** die zweite Reckung als Kluppenreckung ausgeführt wird.

25. Verfahren nach einem der vorangehenden Ansprüche, **dadurch gekennzeichnet, daß** der Folienschlauch als mehrlagiges Coextrudat ausgebildet ist.

26. Verfahren nach einem der vorangehenden Ansprüche, **dadurch gekennzeichnet, daß** die zweite Reckung erst erfolgt, wenn mehrere Folienschichten zu einem mehrschichtigen Verbund zusammengefügt sind.

27. Verfahren nach einem der vorangehenden Ansprüche, **dadurch gekennzeichnet, daß** wenigstens eine Folienlage aus Polyamid hergestellt wird.

28. Verfahren nach einem der vorangehenden Ansprüche, **dadurch gekennzeichnet, daß** wenigstens eine Folienlage aus Polypropylen hergestellt wird.

29. Verfahren nach einem der vorangehenden Ansprüche, **dadurch gekennzeichnet, daß** wenigstens eine Folienlage aus Polyethylen hergestellt wird.

30. Verfahren nach einem der vorangehenden Ansprüche, **dadurch gekennzeichnet, daß** wenigstens eine Folienlage mit Füllmitteln versehen wird.

31. Verfahren nach Anspruch 30, **dadurch gekennzeichnet, daß** die Folienlage mit Mikrokapseln gefüllt wird.

32. Verfahren nach einem der vorangehenden Ansprüche, **dadurch gekennzeichnet, daß** wenigstens eine Folienlage geschäumt wird.

33. Verfahren nach Anspruch 32, **dadurch gekennzeichnet, daß** die Schäumung durch Mikrokapseln erfolgt.

34. Verfahren nach einem der vorangehenden Ansprüche, **dadurch gekennzeichnet, daß** wenigstens in einer Folienlage amorphe Bereiche vorgesehen werden.

35. Verfahren nach Anspruch 34, **dadurch gekennzeichnet, daß** die amorphen Bereiche derart ausgebildet werden, daß diese während und nach einem Reckvorgang immer noch amorph sind.

36. Folie hergestellt nach einem Verfahren entsprechend den Ansprüche 1 bis 35, **dadurch gekennzeichnet, daß** die Folie als steife Folie ausgebildet ist.

37. Folie nach Anspruch 36, **dadurch gekennzeichnet, daß** die Folie gute optische Eigenschaften aufweist.

38. Folie nach Anspruch 37, **dadurch gekennzeichnet, daß** die Folie transparent ausgebildet ist.

39. Folie nach Anspruch 36, 37 oder 38, **dadurch gekennzeichnet, daß** die Folie derart ausgebildet ist, daß sie einen geringen Schrumpf aufweist.

40. Folie nach einem der Ansprüche 36 bis 39, **dadurch gekennzeichnet, daß** die Folie eine gute Spleißbarkeit aufweist.

41. Folie nach einem der Ansprüche 36 bis 39, **dadurch gekennzeichnet, daß** die Folie aufgrund der Abfolge der einzelnen Folienlagen eine schlechte Spleißbarkeit aufweist

42. Folie nach einem der Ansprüche 36 bis 41, **dadurch gekennzeichnet, daß** die Spleißbarkeit durch eine partielle und/oder vollflächige Verklebung einzelner Folienschichten miteinander eingestellt wird.

43. Folie nach einem der Ansprüche 36 bis 42, **dadurch gekennzeichnet, daß** die einzelnen Folienschichten verhältnismäßig dünn ausgebildet sind.

44. Folie nach einem der Ansprüche 36 bis 43, **dadurch gekennzeichnet, daß** eine Vielzahl von Folienlagen vorgesehen ist, die zusammen einen verhältnismäßig dicken Folienverbund bilden.

45. Folie nach Anspruch 44, **dadurch gekennzeichnet, daß** der gesamte Verbund gereckt ist und **dadurch** die Dicke des Verbundes signifikant reduziert ist.
